**Europäisches Patentamt**

**European Patent Office**

**Office européen des brevets**

(19)

(11) Publication number: **0 071 656**
**A1**

# (12) EUROPEAN PATENT APPLICATION

(21) Application number: **81106120.9**

(22) Date of filing: **05.08.81**

(51) int. Cl.³: **G 01 C 3/22, B 60 K 35/00**

(43) Date of publication of application: **16.02.83**
**Bulletin 83/7**

(84) Designated Contracting States: **AT CH DE FR GB LI**

(71) Applicant: **Doberschütz, Reiner, Kolpingstrasse 7, D-5462 Bad Hönningen (DE)**

(72) Inventor: **Doberschütz, Reiner, Kolpingstrasse 7, D-5462 Bad Hönningen (DE)**

(74) Representative: **Koch, Theodor, Oxfordstrasse 20-22 Postfach 15 68, D-5300 Bonn 1 (DE)**

(54) **Method and apparatus for measuring distances or heights.**

(57) The Invention titled: «Method and Apparatus for measuring distances» discloses a method and device (3) which allows one to measure distances from one object to a remote object (1), e.g., the distance from a driver of one car (2) to a car (1) ahead of him. The method allows an observer to determine easily and at any time the exact distance (s) between himself and the object, e.g., a driver can tell, by reading off his speed from the speedometer, whether he is maintaining the necessary safety distance between his car (2) and the car (1) ahead of him, thus enabling him to correct his speed if necessary. The device (3) used for controlling the safety distance comprises a vertically adjustable scaled transparent plate which is mounted adjacent to the windshield of the car in the driver's field of view. The scale markings on this plate consist of a reference line and a sequence of scale lines parallel to the reference line and below it. The driver's eye Is aligned with the reference line and the skyline of the road and then he observes the bumper of the car (1) ahead of him at a distance «x» on the scale below the reference line. This distance «x» and the indicia ($s_1$, $s_2$, ...) of the scale allows the driver to determine the distance between his car (2) and the car (1) ahead of him.

0071656

—1—

## TITLE MODIFIED
### see front page

METHOD AND APPARATUS FOR MEASURING DISTANCES

### Technical Field

The invention relates to a method and a device for measuring the distance of an object from an observer, or the distance of the top of an object from its base (height).

### Background Art

The length of an object is usually measured by placing a ruler directly beside it and determining how many multiples of the ruler length fill out the length of the object. If the object is at a distance from the observer, neither this distance nor the object's length can be measured with a ruler in this direct way.

In general, elaborate measuring devices and/or procedures are necessary in the case just mentioned, where for example a light beam or laser beam is reflected from an object at a large distance from the source of the beam. The distance is then computed from the measured travel time of the beam and the speed of light.

It is important for the driver of a car to determine his distance from a moving vehicle in front of him, so that he can maintain an adequate safety distance that depends on the speed of his car. The safety distance is the distance needed by the driver for his braking response and actual brake application to prevent a collision with the vehicle in front of him should its driver make a sudden stop.

Since the distance between cars travelling one behind the other is relatively short, it is not in general possible to determine this distance by reflecting electromagnetic waves from the car in front.

The usual method in the past of determining the necessary safety distance has been the familiar "rule of thumb" as follows. The driver reads off the speedometer his current speed in kilometers per hour (km/h) and divides this number by two. The result, regarded as being in meters, is the minimum safety distance
that must be maintained. The driver may in some situations be
able to determine his distance from the car ahead by counting
the number of lane divider lines (each one being 9 meters long
on the freeway, or 6 meters off the freeway) or the number of
guideposts (50 meters apart on straightaways) between him and
the other car.

There is another method of estimating the safety distance. At
the instant when the car in front is even with some prominent
reference point (such as a bridge, tree or traffic sign), the
driver begins counting to himself "one thousand, two thousand,
. . .". When the driver's car pulls even with the same reference
point, the number of thousands that he has counted by then is
the number of seconds that separate him from the car in front.
From this elapsed time and his speed, the driver can calculate
his distance from the car ahead.

All of these methods for determining distance between cars are
clearly a burden on the driver, since continual glancing over
at guideposts or counting lane divider lines or elapsed seconds,
followed by mental calculations, may severely distract the driver's
attention from traffic.

### Disclosure of the Invention

The present invention embodies a method of determining, easily
and at any time, the exact distance between an observer and an
object or the height of an object. One preferred embodiment includes a feature which tells the driver of a car whether he is
maintaining the necessary safety distance to the car ahead of
him, thus enabling him to correct his speed if necessary.

The method embodied in the invention for determining the distance
of an object from an observer comprises having the observer,
whose eyes are at a certain fixed distance from a vertical scale
on a transparent plate, observe the relative position on the
scale plate of two apparent points, corresponding to two observed points on the distant object that are a known and fixed
vertical distance apart, such that an imaginary vertical line at
the rear of the object connecting the lines of sight to the two
observed points on the object is approximately parallel to the
scaled plate. The scaled plate can be vertically adjusted and
the scale markings include a reference line, which is moved into
the observer's eye height, and a sequence of scale lines parallel
to the reference line and above or below it. The scale lines are
arranged so that when one observed point lies on the line of
sight through the reference line and the other observed point
lies on the line of sight through a scale line, the apparent
scale line separation from the reference line is inversely proportional to the distance from the observer's eye to the distant
object, since the vertical distance between the observed points
and the horizontal distance from the observer's eye to the vertical scale are fixed and the lines of sight are cut into proportional segments by the plane of the scaled plate and the straight
imaginary line connecting the two observed points.

For example, when the known fixed distance from the observer's
eye to the scale is taken as 60 cm and a distance of 1 meter is
assumed between the two observed points along the imaginary line,
such as the bumper and roof of a car driving in front of the
observer (these two points determining the upper and lower lines
of sight of the observer), then the apparent separation on the
scale of the observed points (being the separation between the
line-of-sight reference line and the corresponding line-of-sight
scale line) will be 26.6 mm when the car in front is 22.5 meters
away. When the car is 65 meters away, the scale line separation
is 10 mm, and when the car is 95 meters away, the scale separation is 0.7 mm. These distances to the car ahead are the safety
distances for a pair of cars travelling at 40, 80 and 100 km/h
respectively. The scale lines are correspondingly marked, so
that a scale of about 5 cm in length suffices to inform a driver
whether he is maintaining the necessary safety distance behind
the car ahead at his current speed.

- 4 -

The invention also embodies a method and apparatus for determining the height of an object at a known distance from
an observer.  The method comprises having the observer, whose
eyes are at a certain fixed distance from a scale on a vertical and transparent scale plate, observe the relative positions on the scale plate of two apparent points corresponding
to the observed base and top of a distant object that is at
a known and fixed horizontal distance from the observer, such
that an imaginary vertical line at the object connecting the
lines of sight to the base and to the top of the object is
approximately parallel to the scale plate.  The scale plate
can be vertically adjusted and the scale markings include a
reference line, which is moved into the observer's reference
line of sight, and a sequence of scale lines parallel to the
reference line and located either above or below it.  The
scale lines are arranged so that when one observed point, e.g.,
the base of the object, lies in the line of sight through the
reference line and the other observed point, e.g., the top
of the object, lies in the line of sight through a scale
line, the separation of this scale line from the reference
line is directly proportional to the height of the object as
measured along the imaginary vertical line from its base to
its top.  This is because the horizontal distance from the
observer's eye to the vertical scale and the horizontal dis-
tance between the observer's eye and the object are fixed
and the lines of sight are cut into proportional segments by
the plane of the scale plate and the imaginary vertical line
corresponding to the height of the object.

- 5 -

## Brief Description of the Drawings

The patent claims and the drawings set out the principle on which
the invention is based and describe various advantageous construc--
tion features of the device.  Advantageous modifications of the
inventive methods and of the measuring devices used in these
methods are described in the claims and in the following description of preferred embodiments of the measuring device as shown
also in the drawings.  These principles, features and modifications of the invention may be further understood by reference to
the detailed description below taken in conjunction with the
accompanying drawings in which:

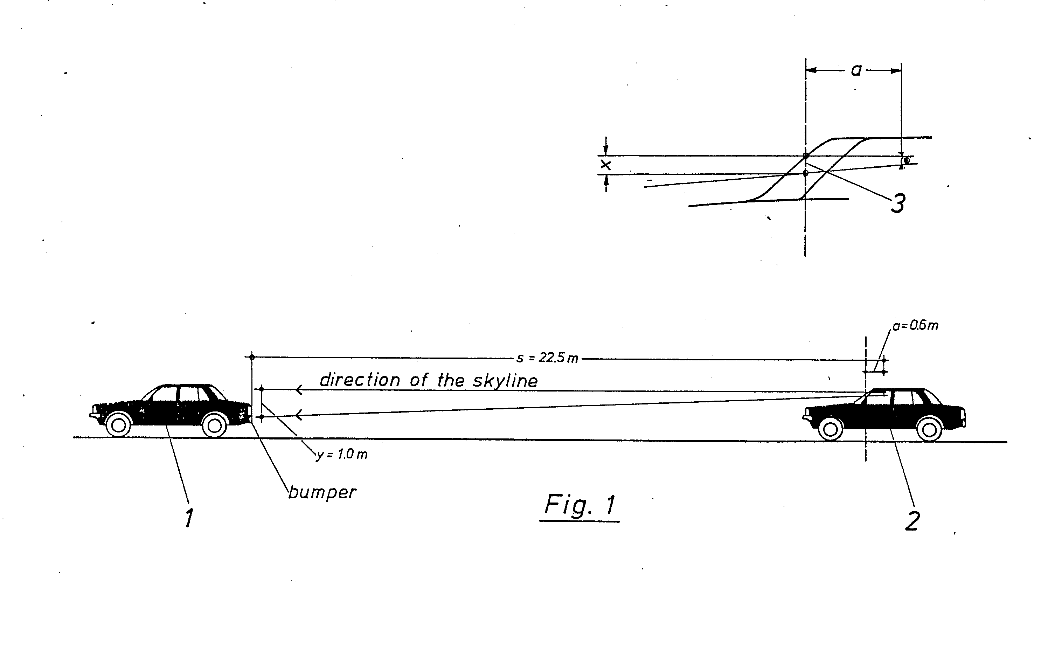

Fig. 1 is a schematic illustration of the inventive method to determine the distance of a following vehicle from a moving vehicle
in front by using a device having a scale and reading from the
scale the apparent scale line separation of two points of the
vehicle in front, the scale line separation being inversely proportional to the distance from the observer's eye to the distant
object.  In this illustration, the distance between the two vehicles as measured between the observer and the bumper of the car
driving in front is 22.5 meters;

Fig. 2 is a diagram showing for various given speeds, the total
braking or safety distance as made up of the distance corresponding to the driver's braking response time and the distance
needed for actual brake application, and also the scale line separations corresponding to the safety distance needed as read from
the scale;

Fig. 3a is an elevational view in section of a preferred embodiment of a measuring device made according to the present invention and mounted in the driver's field of view at his eye height
near the windshield of his vehicle to control the safety distance
between his vehicle and a vehicle in front;

Fig. 3b is a rear elevational view of the embodiment of Fig. 3a
with the scale plate marked with the braking distances on wet roads;
and,

Fig. 3c is a rear elevational view of the embodiment of Fig. 3a with the scale plate marked with the braking distances on dry roads.

### Best Modes for Carrying Out the Invention

In Fig. 1, there is illustrated the inventive method for measuring the distance of an object in the case of measuring the distance between two cars by the driver of the car moving behind.

The invention is based on the following mathematic relationships: If there are two lines of sight from an observer's eye which are cut by parallel lines, the cut portions x,y of the parallel lines form the same ratio as the line of sight segments a,s between the observer's eye and the first and second parallel lines, respectively.

If there is mounted in the car 2 moving behind the car 1 a scaled plate 4 or 5 of the distance measuring device 3 near the windshield in the driver's field of view and at his eye height at a separation of the driver's eye to the scale of a = 0.6 meter and if the vehicle driving in front is at a distance of s = 22.5 meters, the driver will be able to observe on the scale of the scaled plate the relative positions of the bumper and roof of the distant car 1 at a scale line separation of x = 26.6 mm, provided the vertical distance between the lines of sight to the bumper and roof is approximately 1 meter near the rear of the car ahead. For practical purposes, the result will be the same where the observer's eye is aligned with a line-of-sight through the reference line of the scale and parallel to the roadway. A line-of-sight parallel to a relatively flat roadway can be approximated by observing the far distance point at which the roadway apparently meets the horizon, i.e., the "skyline of the road". This line of sight is at a right angle to the scale plate and defines the higher point on the imaginary line at the distant object. In the specific embodiment for measuring distances between cars, the skyline of the road, i.e., the reference point for a line of sight parallel to the roadway, is approximated by the

- 7 -

roof line of the car ahead.  As can be seen in Fig. 1, the vertical distance "y" between the two points at the distant car is equal to the height of the driver's eye above his own bumpers.

The distance "s" of the observer or driver in the vehicle driving behind from the vehicle ahead can now be determined if the values a = 0.6 meter and y = 1 meter are known and if the value x between the line of sight parallel to the roadway and the line of sight to the bumper is read at the scale of the scaled plate as scale line separation since:

$$s = a \cdot y \cdot {}^1\!/x$$

The height (h) of an object can also be determined by using this equation to mark a scale on the transparent plate where "h" replaces "y" and the scaled plate is positioned at a known fixed distance "s" from the object since: $h = {}^s\!/a \cdot x$.  The required distance "s" for positioning the scaled plate can be determined using the odometer of the car to measure the distance traveled from the object whose height is to be determined.

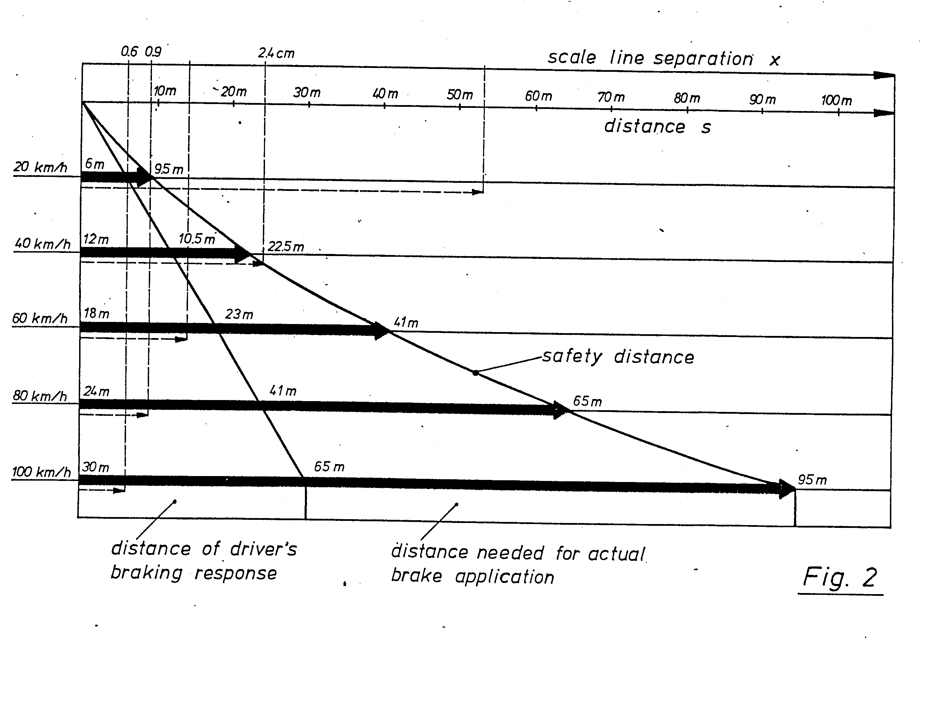

The determination of the distance between the two vehicles moving one behind the other allows a comparison of this distance with the safety distance corresponding to the speed of the cars, which is known from the diagram of Fig. 2.  Thus it is possible to control whether the separation of the cars is great enough or whether the separation must be increased to provide an adequate safety distance.

In Fig. 2, there are shown not only safety distances corresponding to the separations between two moving cars but also scale line separations "x" between the reference line and a scale line that correspond to the apparent distance between observed points (bumper and roof) at the car in front.

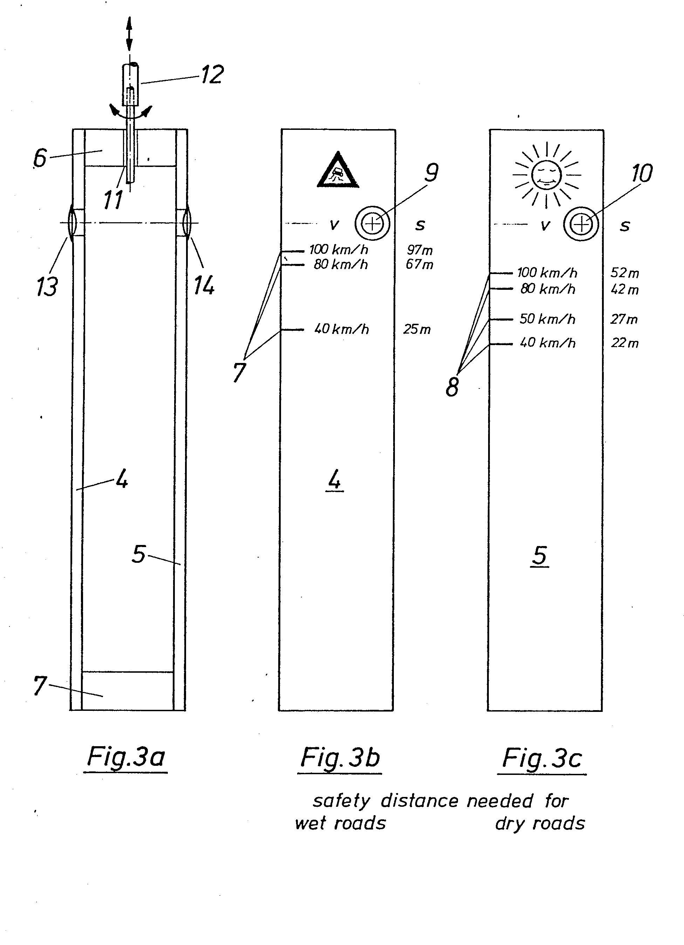

A preferred embodiment of the distance measuring device 3 according to Figs. 3a, 3b and 3c is formed by a transparent plastic

- 8 -

housing. The housing is comprised mainly of a first plate 4 and a second plate 5 which are connected at the top and at the bottom by spacer pieces 6 and 7, respectively, and which are arranged in parallel planes to each other.

Parallel plates 4 and 5 are each in the form of a scaled plate on which there is a sequence of parallel scale lines 7 and 8, respectively. The separations between these scale lines and the reference line "v" correspond to the different safety distances between the cars.

The measuring device 3 is used not only to measure the distances between two moving cars but also allows control of whether the safety distance maintained to the car ahead corresponds to the current speed read off of the speedometer. The indications or indicia of the scale lines or of their separations may correspond not only to the separation distances but also to the current speeds of the cars (e.g., 40 km/hr, 70 km/hr, 100 km/hr, etc.) as shown in Figs. 3b and 3c, this in an indirect way being an indication of the safety distances.

The sequence of scale lines according to Fig. 3b is in separations which indicate the braking distance on wet roads, whereas the separations of the scale lines according to Fig. 3c indicate the braking distance on dry roads. Because of the different braking distances for wet and dry roads, the speeds indicated in Fig. 3c (dry road) are at scale line separations that are of greater dimensions than the scale line separations in Fig. 3b (wet road). Depending on whether the roadway is wet or dry, the scale plate 4 or 5, respectively, is positioned toward the driver.

The reference line of the scale is marked on each of the opposing scale plates 4,5 by a circle with cross hairs enclosed. Thus it is possible to arrange the plane of the two parallel scale plates 4,5 exactly perpendicular to the line of sight of the observer through these two reference lines. This arrangement is achieved when the circles and cross hairs 9 and 10 of the respective plates 4 and 5 are observed one in front of
the other.

As the roof of the car ahead must be observed in the line of sight
through the reference scale lines, the scale plate is mounted
near the windshield and the mounting includes means for vertically adjusting the device 3 to an appropriate height relative
to the driver's eye height so as to bring the cross hairs into
alignment with his line-of-sight to the roof of the car ahead.
Preferably, this "reference" line-of-sight is parallel to the
roadway as previously explained.  As the head of the driver is
usually at or near the roof of his own car, the scale and its
reference line is arranged advantageously near the roof and thus
the sequence of scale lines is arranged preferably with decreasing velocity and decreasing necessary safety distance from
the top to the bottom of the scale plates 4 and 5.  However,
the invention also contemplates reference lines near the bottom
of the scale plates and a reference line-of-sight to the lower
point (bumper), together with scale lines arranged from the bottom to the top.

For height adjustment of the scale plates 4,5, there is a threaded
bore 11 in the spacer piece 6 at the top of the housing.  A
threaded rod 12 is fastened to the car roof and carried in bore
11 so that the overall length of the rod 12 and the housing is
adjustable.  Thus the observer is able to bring the cross hairs
9 and 10 into alignment with the point to be observed on the car
ahead by rotating the housing relative to rod 12 until the reference lines v,v are at the appropriate height for the observer's
line-of-sight.  As it is possible to turn the shaft of the rod
relative to the housing, it is also possible to turn the scale
plates for wet or dry roads toward the driver.

Over the reference markings 9,10 (circles and cross hairs), there
are located lenses 13,14 whereby the markings 9,10 can be seen
in sharp focus only at a definite distance, e.g., 0.6 meter, because of the focal length of these lenses.  Thus the observer is
always at the correct distance "a" in front of the nearest scale plate, which distance is used in combination with the vertical distance "y" at the distant car (roof - bumper separation of 1 meter) for gauging the scale line separations for the distances selected as scale line indicia.

So as to be able to compare the distance measured between cars with the speeds of the vehicles corresponding to the necessary safety distances for wet and dry roads, there are stated as indicia at the scale lines markings indicating both distances between cars and the maximum car velocities for which those distances are the necessary safety distances.

This additional indication of velocities corresponding to the necessary safety distances makes possible a simple control by maintaining the necessary safety distance for the car's speed at the moment. It is only necessary to view in one line-of-sight the markings 9,10 or reference scale lines v,v one in front of the other and the roof of the car ahead and then turn the eye of the observer to a different line of sight so as to view the bumper of the car ahead. If the apparent point of this second line-of-sight toward the bottom of the scale is below the scale line of the present speed of the car (the necessary safety distance), the speed of the vehicle is reduced$^X$ until there is maintained the smaller scale line separation corresponding to the necessary safety distance. $_X$ and thus the distance between the car increased.

### Industrial Applicability

In summary, the invention provides a new, indirect way of measuring the distance of an object which may be moving relative to the observing, measuring person. The invention further provides a way of measuring the height of an object at a known distance from the observer. There is used a transparent scale plate with a sequence of scale lines which represent the height or distance of the object, e.g., the distance or separation between two moving cars. In addition to indications of distance, indications of velocities which correspond to necessary safety distances between vehicles at various speeds may be provided.

- 11 -

The present measuring device thus provides a very simple control
and correction of the necessary safety distance.

If the use of the scaled plates and of means comprising a
rigid vertical shaft in the driver's field of view for
adjusting the height of the scaled plates is regarded
too dangerous there may be used vertically adjusting means
attachable to the plane of the windshield that is used
as mounting for the scaled plates. These means are connected
to the scaled plates and comprise a suction cup that becomes
fastened to the windshield in appropriate heigt.
In case of an accident the suction cup and thus  the scaled
plate get loose and thus is not a danger for the driver.

Claims: 1. A method for measuring the distance(s)of an object (1) from an observer with a device (3) characterised in that it is comprised of a flat transparent scale plate (4,5) having a reference line (v) and a sequence of scale lines (7,8) parallel to and spaced below or above said reference line (v) so that when said reference line (v) is aligned in a first line of sight between the observer's eye and an observed reference point on the distant object (1) and another observed point on or above the distant object lies in a second line of sight through one of said scale lines (7,8) and when said scale plate (4,5) is parallel to an imaginary straight line connecting said observed points on the object (1) such that said first and second lines of sight are cut into proportional segments by the plane of said scale plate (4,5) and said imaginary line, the separation (x) between said scale line (7,8) and said reference line (v) is inversely proportional to the distance from the observer's eye to the object (1), the distance (y) between said two observed points along said imaginary line and the distance (a) from the observer's eye to said scale plate (4,5) each being of a predetermined value; means (6,11,12) for vertivally adjusting said scale plate (4,5) so as to move said reference line (v) to the height of the observer's eye and into alignment with said first line of sight; and indicia ($s_1$,$s_2$,...) marking said scale lines with values of the various distances from the observer's eye to a distant object(1) corresponding to the separations (x) of said scale lines (7,8) from said reference line (v); said method comprising the steps of positioning the observer's eye at said predetermined distance (a) from said scale plate (4,5){xx} bring said reference line (v) into alignment with said first line of sight from the  observer's eye to said observed reference point on said object (1), observing the relative position on said scale of said other observed point on said distant object, and reading from said scale indicia (xx) - vertically adjusting said scale plate (4,5)

2

at the relative position of said other observed point the distance (s) from the observer's eye to said imaginary line connecting said two observed points on said distant object (1).

2. The method for measuring distance in accordance with claim 1 characterised in that at least part of the scale lines (7,8) are arranged to be seen by the observer only when he is at a certain prescribed distance (a) from the scale plate (4,5).

3. The method for measuring distance in accordance with claim 1 characterised in that the distance between two cars travelling one behind the other is measured by means of the bumper and roof of the front car (1) being taken as observation points.

4. The method for measuring distance in accordance with claim 3 characterised in that the vertical distance $(y)$ between the bumper and roof of said front car (1) is about 1 meter.

5. The method for measuring distance in accordance with claim 3 characterised in that each of said scale lines (7,8) corresponds to a certain distance between two cars travelling one behind the other at a certain speed and is marked with said speed $(v_1, v_2, ...)$ for which said distance represents a safety distance, thus allowing the driver of the following car (2) to adjust his speed to provide said safety distance.

6. The method for measuring distance in accordance with claim 5 characterised in that said predetermined distance (a) between the observer's eye and the scale is about 60 cm, and said predetermined distance $(y)$ between the bumper and roof of the car (1) ahead is taken to be approximately 1 meter.

7. A device for measuring the distance(s) of an object from an observer characterised in that it is comprising a flat transparent scale plate (4,5) having a reference line (v) and a sequence of scale lines (7,8) parallel to and spaced below or above said reference line (v) so that when said reference line is aligned in a first line of sight between the observer's eye and an observed reference point on the distant object (1) and another observed point on or above the distant object lies in a second line of sight through one of said scale lines and when said scale plate (4,5) is parallel to an imaginary straight line connecting said observed points on the object (1) such that said first and second lines of sight are cut into proportional segments by the plane of said plate (4,5) and said imaginary line, the separation (x) between said scale line and said reference line is inversely proportional to the distance (s) from the observer's eye to the object (1), the distance (y) between said two observed points along said imaginary line and the distance (a) from the observer's eye to said scale plate each being of a predetermined value; means (6,11,12) for vertically adjusting said scale plate (4,5) so as to move said reference line (v) to the height of the observer's eye and into alignment with said first line of sight; and indicia ($s_1, s_2, \ldots$) marking said scale lines (7,8) with values of the various distances from the observer's eye to a distant object (1) corresponding to the separations (x) of said scale lines (7,8) from said reference line (v).

8. The device for measuring distance in accordance with claim 7 characterised in that the scaled plate (4,5) is a transparent plate of glass or plastic.

9. The device for measuring distance in accordance with claim 7 characterised in that said vertically adjusting means (6,11,12) includes a mounting for said scaled plate (4,5) and means (11,12) for vertically adjusting said scaled plate (4,5) relative to said mounting so that the

4

reference scale line (v) can be moved into the observer's eye height in a line of sight to said observed reference point.

10. The device of claim 9 characterised in that two transparent plates (4,5) are parallel to each other and have corresponding scale lines (7,8) and reference lines (v) arranged relative to each other such that when said reference lines (v) are superimposed in the observer's line of sight the planes of the plates (4,5) are perpendicular to said line of sight.

11. The device of claim 10 in which a circle with cross hairs (9,10) enclosed is next to each of said reference lines (v).

12 A device for measuring or correcting the safety distance between cars (1,2) for use by the driver in a following car (2) characterised in that said device (3) comprising an adjustable scaled plate (4,5) mounted near the windshield in the driver's field of view and at his eye height, said plate (4,5) being perpendicular to the driver's line of sight and having scale markings comprised of a reference line (v) movable into the driver's eye height and a sequence of scale lines (7,8) parallel to said reference line (v) and spaced below it in such a way that the scale line separation (x) from said reference line (v) is inversely proportional to the distance of the object (1) from the driver, the lines of sight from the driver to the car ahead being cut into parallel segments by the scaled plate (4,5) and an imaginary line connecting two observed points on the car (1) ahead, and indications $(s_1, s_2, \ldots; v_1, v_2, \ldots)$ on said plate of said scale line separations gauged in safety distances for given speeds and stating the speeds corresponding to said safety distances.

0071656

5

13. The device in accordance with claim 12, characterised in that said device (3) includes two scaled transparent plates (4,5) arranged opposite and parallel to each other, one plate (4) having scale lines (7) with indicia indicating braking distances on wet roads, and the other plate (5) having scale lines (8) with indicia indicating braking distance on dry roads.

14. Teh device in accordance with calim 13, characterised in that said scaled plates (4,5) are mounted so as to be rotated around a vertical shaft (12) having means for adjusting the height of said scaled plates (4,5) relative to the eye height of said driver.

15. The device in accordance with claim 14 characterised in that a lens (13,14) is located on one of said scaled plates (4,5) relative to said reference line (v) on the other of said scaled plates and the focal length of said lens is such that said scale reference line (v) can be seen in sharp focus only when the observer's eye is at a certain prescribed distance (a) from said one scaled plate (4,5) and at a certain prescribed height relative to both of said scaled plates.

16. A device for measuring the height of a vertically extending object at a distance form an observer characterised in that it is comprising a flat transparent scale plate (4) having a reference line (v) and a sequence of scale lines (7) parallel to and spaced above or below said reference line (v) so that when said reference line (v) is aligned in a first line of sight between the observer's eye and an observed reference point at one vertical end of the distant object (1) and another observed point at the other vertical end of the distant object or above lies in a second line of sight through one of said scale lines (7) and when said scale plate (4) is parallel to an imaginary straight line connecting said observed points on the object such that said first and second lines of sight are cut into proportional segments by the plane of said plate (4) and said imaginary line, the separation (x) between said scale line (7) and said reference line (v) is directly proportional to the height of the distant object, the distance (s) from the observer's eye to said imaginary line and the distance (a) from the observer's eye to said scale plate each being of a predetermined value; means (6,11,12) for vertically adjusting said scale plate (4) so as to move said reference line (v) to the height of the observer's eye and into alignment with said first line of sight; and indicia ( $h_1,h_2$, ...) marking said scale lines (7) with values of the various heights of distant objects corresponding to the separations (x) of said scale lines from said reference line.



direction of the skyline

s = 22.5 m

a = 0.6 m

y = 1.0 m

bumper

Fig. 1

Fig. 2

0071656

**Fig.3a**

6

11

12

13

14

4

5

7

---

**Fig.3b**

9

| v | s |
|---|---|
| 100 km/h | 97m |
| 80 km/h | 67m |
| 40 km/h | 25m |

7

<u>4</u>

safety distance needed for
wet roads

---

**Fig.3c**

10

| v | s |
|---|---|
| 100 km/h | 52m |
| 80 km/h | 42m |
| 50 km/h | 27m |
| 40 km/h | 22m |

8

<u>5</u>

dry roads

00771656

European Patent Office

**EUROPEAN SEARCH REPORT**

Application number

EP 81 10 6120

| Category | Citation of document with indication, where appropriate, of relevant passages | Relevant to claim |
|---|---|---|
| | **DOCUMENTS CONSIDERED TO BE RELEVANT** | |
| Y | GB - A - 339 150 (CYRILLE POULIOT)<br>* Page 1, lines 57-95 * | 1,7 |
| | -- | |
| Y | DE - A - 2 425 870 (FA. D. BODAMER)<br><br>* Claims 1,2,4-6 * | 1,3,4,<br>7 |
| | -- | |
| A | US - A - 3 977 086 (A.J. WILLIAMS)<br>* Figure 2 * | 1,6 |
| | -- | |
| A | US - A - 3 908 281 (M.C. FOX)<br>* Figure 1 * | 1,16 |
| | -- | |
| A | US - A - 3 603 929 (T.T. DRYSDALE)<br>* Abstract * | 1,3 |
| | -- | |
| A | US - A - 1 879 592 (G.D. THOMAS)<br>* Figure 3; page 1, lines 87-<br>91 * | 1,9 |
| | -- | |
| A | US - A - 1 363 670 (N.D. PARKER et al.)<br>* Page 1, lines 55-94; page 2,<br>lines 70-75 * | 1,2 |
| | -- | |
| A | DE - A - 2 711 351 (E. SAMER)<br>* Claims 1,3,5,6; page 3, para-<br>graphes 5,6 * -- ./. | 1,14 |

**CLASSIFICATION OF THE APPLICATION (Int. Cl. 3)**

G 01 C 3/22
B 60 K 35/00

**TECHNICAL FIELDS SEARCHED (Int.Cl. 3)**

B 60 K 35/00
        37/02
B 60 R  1/00
G 01 B 11/14
G 01 C  3/00
        3/02
        3/10
        3/12
        3/16
        3/20
        3/22
        3/24
        3/26
        3/28    ./.

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

| X | The present search report has been drawn up for all claims | |
|---|---|---|

| Place of search | Date of completion of the search | Examiner |
|---|---|---|
| The Hague | 16-03-1982 | PRATSCH |

EPO Form 1503.1  06.78

European Patent Office

**EUROPEAN SEARCH REPORT**

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| A | DE – A – 2 049 634 (H. KREBS)<br>* Claims 1,5 * | 1,5,<br>11,15 | |
| A | DE – B – 1 065 626 (FRITZ WERNER AG)<br>* Claim 1; column 3, lines 33-38 * | 1,3 | |
| A | GB – A – 1 378 576 (J. BROCKLESBY C)<br>* Claims 1,6,7; figures 1,2 * | 1,5,7,<br>8 | **TECHNICAL FIELDS SEARCHED (Int. Cl.³)**<br><br>G 01 C    5/00<br>            9/00<br>            9/02 |
| A | GB – A – 1 261 232 (J.S. PRATT)<br>* Figure 2; page 6, lines 8-14 * | 1,2 | G 08 G    1/16<br>            3/02<br>            5/04<br>            7/02<br>            9/02 |
| A | FR – A – 2 179 611 (MATON G.)<br>* Page 1, lines 3-12; figure 1 * | 1,7,8 | |
| A | FR – A – 1 112 690 (E.L. NICCOLAI) | | |

EPO Form 1503.2   06.78